# EUROPEAN PATENT APPLICATION

(11) **EP 1 266 949 A1**
(43) Date of publication of application: **18.12.2002**
(21) Application number: 01915728.8
(22) Date of filing: 23.03.2001
(51) Int. Cl.: C10L 1/06, C10L 1/18

(54) **FUEL OIL FOR USE BOTH IN INTERNAL COMBUSTION IN ENGINE AND FUEL CELL**

(30) Priority: 23.03.2000 JP 2000081357
(71) Applicant: IDEMITSU KOSAN CO., LTD., Tokyo 100-8321 (JP)
(72) Inventor: AKIMOTO, Takashi, Sodegaura-shi, Chiba 299-0205 (JP); IIZUKA, Masashi, Sodegaura-shi, Chiba 299-0205 (JP); HIRANO, Hiroshi, Sodegaura-shi, Chiba 299-0205 (JP)
(74) Representative: Gille Hrabal Struck Neidlein Prop Roos
(86) International application number: JP0102331
(87) International publication number: WO01070914

(57) **Abstract**

A fuel oil for use both in an internal combustion engine and in a fuel cell containing 50 % by volume or more of an alkylate gasoline, and, optionally, 1 to 50 % by volume of isopentane, 1 to 12 % by volume of a hydrocarbon having 4 carbon atoms, 7 % by volume or less of an oxygen-containing compound, and 1 to 30 % by volume of a desulfurized light naphtha; and a fuel oil for use both in an internal combustion engine and in a fuel cell containing 10 to 60 % by volume of a desulfurized light naphtha, 40 to 90 % by volume of a benzene-free reformed gasoline and 0 to 10 % by volume of a hydrocarbon having 4 carbon atoms. Each of the above fuel oils is a fuel oil for a fuel cell which can produce hydrogen with good efficiency, has no adverse effect on reforming catalysts and electrodes for a fuel cell, and is reduced in deactivation of reforming catalysts and the like, and a fuel oil for an internal combustion engine which has a high octane number and can be used without causing knocking or the like.

## Description

### Technical Field

This invention relates to a fuel oil usable both in an internal combustion engine and in a fuel cell, and, in more detail, relates to a fuel oil which comprises petroleum hydrocarbon fractions such as a gasoline fraction and is usable both in an internal combustion engine and in a fuel cell.

### Background Art

Fuel for a fuel cell is generally hydrogen, and it is proposed to use, as the hydrogen, hydrogen gas itself, hydrogen obtained by reforming or decomposing methanol or the like, hydrogen obtained from a town gas containing as a main component methane being gaseous at ordinary temperature and at ordinary pressure, or from an LPG or the like containing propane as a main component, or hydrogen from other sources.

However, when hydrogen gas is used as such, handling of the gas is hard since it is itself a gas. Methanol has problems that its energy density is low, it is expensive, supply equipment is not provided, etc. Town gas and LPG have problems that their use is regionally limited, it is hard to handle them, etc., and especially when they are used as a fuel for a fuel cell for transportation such as automobiles, there is practically a big problem.

In recent years, fuel cell powered vehicles equipped as a power source with a fuel cell having high energy efficiency and being low in loads on environment have gotten to draw attention, and development of a fuel cell to be used therein is desired. On the other hand, gasoline which has hitherto been used as a fuel for an internal combustion engine in automobiles, etc. and petroleum hydrocarbon fractions composing gasoline have advantages that they are usually liquid, have a high energy density, etc., and they are considered to be effectively utilizable in a fuel cell. Further, as to such gasoline fractions, their supply system, etc. is sufficiently provided.

### Disclosure of Invention

However, despite the above findings, it is practically hard to change all of an internal combustion engine having hitherto been used in automobiles, etc. to a fuel cell engine all at once, and at the transitional period, it is desired to use a fuel oil usable both in an internal combustion engine and in a fuel cell. There are also problems that in comparison with methanol, etc., gasoline fractions are not easy to reform due to deactivation of the reforming catalyst with coke or poisoning of the catalyst, and the life of the catalyst is comparatively short. Thus, if a fuel oil generally used in an internal combustion engine is used as such in a fuel cell, problems as mentioned above arise, and on the other hand, if a fuel oil developed for a fuel cell is used in an internal combustion engine, problems of knocking, etc. arise, and in either case, simple diversion thereof was difficult.

The invention was made for solving the above problems. Namely, the invention aim is to provide a fuel oil usable for both an internal combustion engine and a fuel cell which can efficiently produce hydrogen, has no adverse effect on a reforming catalyst and the electrodes of the fuel cell and less causes deactivation of a reforming catalyst when the fuel oil is used as a fuel oil for the fuel cell, and it has a high octane number and can effectively be used without causing knocking, etc. when it is used as a fuel oil for an internal combustion engine of an automobile.

The present inventors have intensely studied for solving the above problems, and as a result, they found that the above aim could be achieved by using a gasoline fraction of particular composition and properties as a fuel oil. The invention was completed based on the finding. Namely, the invention relates to
(1) A fuel oil for usable both in an internal combustion engine and in a fuel cell containing 50 % by volume or more of an alkylate gasoline (Fuel oil 1), and
(2) A fuel oil for usable both in an internal combustion engine and in a fuel cell containing 10 to 60 % by volume of a desulfurized light naphtha and 40 to 90 % by volume of a benzene-free reformed gasoline (Fuel oil 2).

### Best Mode for Carrying Out the Invention

The invention is in more detail described below.

The invention relates, first, to a fuel oil for usable both in an internal combustion engine and in a fuel cell containing 50 % by volume or more of an alkylate gasoline (Fuel oil 1). The alkylate gasoline means alkylated gasoline obtained by alkylation reaction, rich in isoparaffin having a high octane number and not containing aromatic components and olefin fractions.

In the invention alkylate gasoline having an octane number of 90 to 100, preferably of about 96 is used. Such alkylate gasoline can be obtained by introducing an alkyl group into hydrocarbon fractions such as isoparaffin and aromatic fractions, and as a catalyst used then, there can be mentioned an acid catalyst such as sulfuric acid or hydrofluoric acid, a solid acid catalyst such as synthetic zeolite or solid phosphoric acid, etc.

Fuel oil 1 of the invention contains the alkylate gasoline in an amount of 50 % by volume or more, preferably 50 to 95 % by volume, more preferably 50 to 90 % by volume, particularly preferably 50 to 80 % by volume. When the content of the alkylate gasoline is less than 50 % by volume, the octane number is low and knocking sometimes takes place when used as a fuel for an internal combustion engine. When the content is more than 95 % by volume, there is a possibility that startability gets poor when used as a fuel for an internal combustion engine.

Fuel oil 1 of the invention preferably contains, in addition to the alkylate gasoline, isopentane in an amount of 1 to 50 % by volume. When the content of isopentane is less than 1 % by volume, the effect by the addition is sometimes not exerted. When it is more than 50 % by volume, in use as a fuel for an internal combustion engine, there sometimes arises a case where knocking is caused due to lowering of the octane number or a case where a vapor lock phenomenon is caused due to too high vapor pressure. Such isopentane can be separated by distilling a hydrocarbon oil at ordinary pressure, and in the invention, isopentane having an octane number of 85 to 95, preferably of about 90, and having a vapor pressure of 130 to 170 kPa, preferably of about 150 kPa is preferably used.

Fuel oil 1 of the invention preferably further contains a hydrocarbon compound having 4 carbon atoms in an amount of 1 to 12 % by volume. As the hydrocarbon compound having 4 carbon atoms, there can be mentioned butane, n-butene, isobutene, etc., and as them ones obtained according to a process conventional in the field can appropriately be used. When the content of the hydrocarbon compound is less than 1 % by volume, the effect by the addition is sometimes not exerted, and when the content is more than 12% by volume, there sometimes arises a case where a vapor lock phenomenon is caused due to too high vapor pressure, when the fuel oil is used as a fuel for an internal combustion engine.

Fuel oil 1 of the invention preferably further contains an oxygen-containing compound in an amount of 7 % by volume or less. As the oxygen-containing compound, MTBE (methyl t-butyl ether), ETBE (ethyl t-butyl ether), TAME (t-amyl methyl ether), etc. can preferably be mentioned from the viewpoint of their handling, prices, etc.

In the invention, by adding the oxygen-containing compound, effects that the octane number is heightened and the reforming reaction gets to progress easily can be obtained. When the content is more than 7 % by volume, in use as a fuel for an internal combustion engine, there sometimes arises a case where the fuel oil has adverse effects on a three-way catalyst for cleaning the exhaust gas and NOx in the exhaust gas is increased. From this standpoint, it is preferred that Fuel oil 1 of the invention contains the oxygen-containing compound in an amount of 1 to 7 % by volume.

Fuel oil 1 of the invention preferably further contains desulfurized light naphtha in an amount of 1 to 30 % by volume. The desulfurized light naphtha means light naphtha composed of normal paraffin, isoparaffin, naphthene, etc. having 4 to 7 carbon atoms and usually obtained by fractionally distilling crude oil into light naphtha in an atmospheric distillation plant and desulfurizing the light naphtha in a naphtha-desulfurizing apparatus, or by fractionally distilling crude oil into full range naphtha in an atmospheric distillation plant, desulfurizing the full range naphtha in a naphtha-desulfurizing apparatus and fractionally distilling it into light naphtha. When the content of the desulfurized light naphtha is less than 1 % by volume, the effect of the addition is sometimes not exerted, and when the content is more than 30 % by volume, the octane number gets low and knocking sometimes occurs in use as a fuel for an internal combustion engine.

The sulfur content of the desulfurized light naphtha is usually 5 ppm by weight or less, preferably 1 ppm by weight or less, more preferably 0.1 ppm by weight or less.

In the invention, it is preferred to use, as the desulfurized light naphtha, an isomerized desulfurized light naphtha having a ratio of isoparaffin to normal paraffin of 1 or more, preferably 1.5 or more, more preferably 2.5 or more. As such isomerized desulfurized light naphtha, one obtained by isomerizing a desulfurized light naphtha according to a process usually used in the art, for example according to a process of passing a desulfurized light naphtha through a platinum catalyst such as a platinum carried on alumina catalyst, a platinum carried on zeolite catalyst or a platinum carried on a strongly acidic carrier catalyst, can be used.

As a fuel oil used for both an internal combustion engine and a fuel cell in the invention, there can be mentioned, apart from the above Fuel oil 1, Fuel oil 2 containing 10 to 60 % by volume of a desulfurized light naphtha and 40 to 90 % by volume of a benzene-free reformed gasoline, and, optionally, 10 % by volume or less of a hydrocarbon compound having 4 carbon atoms.

As to the desulfurized light naphtha and the hydrocarbon compound having 4 carbon atoms, the same desulfurized light naphtha and the hydrocarbon compound having 4 as used in Fuel oil 1 are used. As to the contents, when the content of the desulfurized light naphtha in Fuel oil 2 is less than 10 % by volume, there sometimes arises a case where the content of aromatic compounds is increased and, in use as a fuel for a fuel cell, the reforming reaction gets disadvantageous. When the content is more than 60 % by volume, there sometimes arises a case where the octane number becomes low and, in use as a fuel for an internal combustion engine, knocking occurs. By adding the hydrocarbon compound having 4 carbon atoms, in use as a fuel for an internal combustion engine, the effects that the vapor pressure is increased and the startability is heightened can be obtained. When the content is more than 10 % by volume, there sometimes arises a case where a vapor lock phenomenon occurs due to too high vapor pressure.

The above Fuel oil 2 contains 40 to 90 % by volume of the benzene-free reformed gasoline. The reformed gasoline means a gasoline obtained by thermally reforming or catalytically reforming a direct distillation gasoline generally having a low octane number, and in the invention, one having an octane number of 95 to 100 is preferably used. As a catalyst used in the catalytic reforming, there can, for example, be mentioned a platinum catalyst, etc. The benzene-free reformed gasoline means a gasoline obtained by removing benzene from the reformed gasoline through distillation or the like.

As processes for producing the benzene-free reformed gasoline, various processes can be mentioned, but the following one is preferred.
(1) In the first fractionating tower, from the top part, a low-boiling fraction containing saturated hydrocarbons having 5 carbon atoms as a main component is separated from the reformed gasoline (top temperature 73 to 83°C, top pressure 3 to 4 kg/cm² G).
(2) The fraction withdrawn from the bottom part of the first fractionating tower is introduced into the second fractionating tower, and from the top part a medium-boiling fraction containing benzene and saturated hydrocarbons having 6 and 7 carbon atoms of a low octane number as main components is withdrawn, and at the same time, from the bottom part a high-boiling fraction containing aromatic hydrocarbons having 7 to 10 carbon atoms of a high octane number as main components is withdrawn (top temperature 95 to 105°C, top pressure 1.3 to 2.3 kg/cm² G).
(3) The above low-boiling fraction and high-boiling fraction are mixed to give a benzene-free reformed gasoline.

According to this process, it is, usually, possible to reduce the content of benzene in the reformed gasoline being 4 to 10 % by volume up to 0 to 0.5 % by volume, which is advantageous for the reforming reaction, and in addition, since the fraction having a low octane number is removed together with benzene as the medium-boiling fraction, it is possible to heighten the octane number, which is desirable in use for an internal combustion engine.

As further processes for reducing the amount of benzene in the reformed gasoline, there can, for example, be mentioned (1) modification of operating condition of the catalytic reforming apparatus, (2) a process of removing the C₆ fraction in desulfurized heavy naphtha as a raw material by distillation, (3) a process of removing the benzene fraction from the reformed gasoline by distillation, (4) a process of hydrogenating the benzene fraction in the reformed gasoline, by a catalytic reaction, to convert it to cyclohexane, etc. and then introducing them into an isomerizing apparatus where they are isomerized into isomers having a high octane number, (5) a process of alkylating the benzene fraction in the reformed gasoline, by a catalytic reaction, to convert it to alkylated aromatic compounds having a high octane number, and (6) a process of alkylating the benzene fraction removed and separated by the above process (2) with an off-gas from a FCC (fluidized catalytic cracker) containing a large amount of ethylene, etc to convert the benzene fraction to alkylated aromatic compounds having a high octane number, etc.

When the content of the reformed gasoline in Fuel oil 2 is less than 40 % by volume, the octane number is lowered and knocking sometimes takes place in use as a fuel for an internal combustion engine, and when the content is more than 90 % by volume, the content of aromatic compounds increases, and the reforming reaction sometimes become disadvantageous in use as a fuel for a fuel cell.

It is preferred that any of Fuel oils 1 and 2 for use both in an internal combustion engine and in a fuel cell of the invention has a research octane number of 89 or more. When the research octane number is less than 89, knocking sometimes occurs in use as a fuel for an internal combustion engine.

It is also preferred that any of Fuel oils 1 and 2 for use both in an internal combustion engine and in a fuel cell of the invention has a vapor pressure of 44 to 93 kPa. When the vapor pressure is less than 44 kPa, the startability of the engine sometimes gets poor in use as a fuel for an internal combustion engine, and when it is more than 93 kPa, a vapor lock phenomenon sometimes takes place due to too high vapor pressure.

The fuel oil of the invention can be used both in an internal combustion engine and in a fuel cell. Namely, when used in an internal combustion engine, the fuel oil has a high octane number and can be used effectively without causing knocking, and when it is used in a fuel cell, it can produce hydrogen efficiently, and has no adverse effect on the reforming catalyst and the electrodes of the fuel cell and thus deactivation of the reforming catalyst, etc. can be reduced.

Particularly, the fuel oil of the invention has characteristics that the purity of hydrogen produced therefrom is high, lowering of the partial pressure of hydrogen is small, etc., and is, therefore, suitable for production of hydrogen for a fuel cell.

For producing hydrogen from the fuel oil, the fuel oil is first desulfurized according to necessity. As the desulfurization method, a hydrodesulfurization method is usually used. The hydrodesulfurization is carried out under a pressure of from ordinary pressure to 5 MPa at a temperature of 200 to 400°C using a hydrodesulfurizing catalyst such as Co-Mo/alumina or Ni-Mo/alumina and an adsorbent of hydrogen sulfide such as ZnO. Then, the desulfurized fuel oil is subjected to steam reforming and/or partial oxidation. According to the invention, a fuel oil free of carbon deposition on the steam reforming catalyst, etc. and capable of efficiently producing hydrogen can be obtained.

There is no particular limitation about the process of steam reforming, but, usually, the steam reforming is usually carried out as follows.

First, on a steam reforming catalyst to be used, there is no particular limitation, but as the metal to be carried, there can be mentioned Ni, zirconium or a noble metal such as ruthenium (Ru), rhodium (Rh) and platinum (Pt). These metals to be carried can be used alone or in a combination of two or more.

Among the above metals to be carried, Ru is particularly desirable, and Ru has a large effect in inhibition of carbon deposition during the steam reforming reaction. The amount of Ru to be carried is preferably 0.05 to 20 % by weight, more preferably 0.05 to 15 % by weight, based on the weight of the carrier. When the amount is less than 0.05 % by weight, the activity of the steam reforming reaction is sometimes extremely lowered, and when the amount is more than 20 % by weight, remarkable increase of the activity is hard to obtain.

As a specific example of combination of metals to be carried, a combination of Ru and zirconium can be mentioned. Ru and zirconium can be carried together or separately on a carrier. The amount of zirconium to be carried is preferably 0.5 to 20 % by weight, more preferably 0.5 to 15 % by weight, in terms of ZrO₂, based on the weight of the carrier. In the case of this combination of metals to be carried, it is preferred to further add cobalt and/or magnesium. The amount of cobalt to be added is preferably 0.01 to 30, more preferably 0.1 to 30, as an atomic ratio of cobalt/ruthenium, and the amount of magnesium to be added is preferably 0.5 to 20 % by weight, more preferably 0.5 to 15 % by weight, in terms of magnesia (MgO).

On the other hand, as the carrier of the catalyst used in the steam reforming, an inorganic oxide is used, and there can, specifically, be mentioned alumina, silica, zirconia and magnesia and a mixture thereof. Particularly preferred among them are alumina and zirconia.

As a preferred embodiment of the steam reforming catalyst, there can be mentioned a catalyst comprising zirconia having carried Ru thereon. This zirconia can be zirconia itself (ZrO₂) or a stabilized zirconia containing a stabilizing component such as magnesia. As the stabilized zirconia, ones containing magnesia, yttria, ceria or the like are suitable.

As another preferred embodiment of the steam reforming catalyst, there can be mentioned a catalyst comprising an alumina carrier having carried Ru and zirconium thereon, or Ru, zirconium and further cobalt and/or magnesium thereon. As the alumina, α-alumina particularly excellent in heat resistance and mechanical strength is preferred.

In the production of hydrogen, it is preferred to carry out the steam reforming in such a condition that the S/C (mole ratio), which is a ratio of steam (S) to carbon (C) derived from the fuel oil, is 2 to 5, particularly 2 to 4. When the steam reforming is carried out at such a condition the S/C (mole ratio) is as high as more than 5, heat loss is large since there arises a need to produce excess steam, and the efficiency of hydrogen production is sometimes lowered. When S/C is less than 2, the amount of hydrogen produced is sometimes lowered.

In the production of hydrogen, it is preferred to carry out the steam reforming in the condition of maintaining the temperature of the inlet of the steam reforming catalyst layer at 630°C or less.

Since the temperature of the inlet of the steam reforming catalyst layer tends to rise due to the addition of oxygen, it is necessary to control the temperature. When the inlet temperature is more than 630°C, there can be a case where thermal decomposition of the raw material hydrocarbon is accelerated, and carbon via radicals formed is deposited on the catalyst or the wall of reactor tubes to make the running hard.

The temperature of the outlet of the catalyst layer is not particularly limited, but preferably 650 to 800°C. When the temperature of the outlet of the catalyst layer is less than 650°C, the amount of hydrogen produced is not sufficient, and for carrying out the reaction at a temperature more than 800°C, the reactor sometimes needs to be made of highly heat resistant materials, which is not desirable in view of economical efficiency.

In the production of hydrogen, the reaction pressure is preferably from ordinary pressure to 3 MPa, more preferably from ordinary pressure to 1 MPa. The flow rate of the fuel oil is preferably 0.1 to 100 h⁻¹ in terms of LHSV.

As to the production of hydrogen, also when the fuel oil is used in such a case where hydrogen is produced in a combination of the steam reforming and partial oxidation, hydrogen can be produced efficiently.

The partial oxidation is carried out at a reaction pressure of from ordinary pressure to 5 MPa, a reaction temperature of 400 to 1,100°C, an oxygen/carbon ratio of 0.2 to 0.8 and an LHSV of 0.1 to 100 h⁻¹ using a catalyst comprising a heat resistant oxide having carried a noble metal such as preferably ruthenium, nickel or the like thereon. When steam is added, a S/C ratio of 0.4 to 4 is adopted.

In the above process of production of hydrogen, since CO obtained by the steam reforming adversely influences the hydrogen formation, it is preferred to remove the CO by a reaction to convert it to CO₂.

As described above in detail, according to the invention, there can be provided a fuel oil for use both in an internal combustion engine and in a fuel cell, which can produce hydrogen with good efficiency, has no adverse effect on a reforming catalyst and electrodes for a fuel cell, and is reduced in deactivation of the reforming catalyst, etc., and which has a high octane number and can be used without causing knocking, etc when it is also used as a fuel oil for an internal combustion engine.

The invention is further specifically described by examples, but the invention is not limited at all by these examples.

### Examples 1 to 9 and Comparative examples 1 to 3

Fuel oils having compositions and properties shown in Table 1 were prepared, and the research octane number and vapor pressure of each of them were measured according to JIS K2280 and JIS K2258, respectively. An experiment of production of hydrogen as shown below was carried out using each of them, and a coking test of the catalysts after the reaction is carried. The results are shown in Table 1.

### Experiment of production of hydrogen

Two fixed bed flow-type reactors were connected, and desulfurization was carried out in the first reactor and steam reforming was carried out in the second reactor, under the following conditions, respectively.

### (First reactor)

### Desulfurization

Catalyst: Co-Mo (the first part) / ZnO (the latter part)
Condition: ordinary pressure, temperature 330°C, LHSV=1.3 h⁻¹

### (Second reactor)

### Reforming

Catalyst: Water (20 % by weight) was added to α-alumina powder, and the mixture was mixed and compression molded by a kneader to give columnar moldings of diameter 5 mm and length 5 mm. The moldings were dried at 200°C for 3 hours, and calcined at 1,280°C for 26 hours to obtain an alumina carrier. Separately, 0.66 g of ruthenium trichloride (RuCl₃/nH₂O) (containing 38 % of Ru), 2.47 g of cobalt nitrate (Co(NO₃)·36H₂O) and 6.36 g of magnesium nitrate (Mg(NO₃)·26H₂O) were added to an aqueous solution of zirconium oxychloride (ZrO(OH)Cl) (2.5 g in terms of ZrO₂), and the mixture was stirred until they were dissolved. The whole amount of the solution was 10 cc. This solution was impregnated into 50 g of the alumina carrier (pore filling method), and then the impregnated carrier was dried at 120°C for 5 hours, calcined at 500°C for 2 hours and adjusted in a particle size to from 16 to 32 mesh. The catalyst obtained contains, based on the weight of the carrier, 0.5 % by weight of Ru, 5 % by weight of Zr in terms of zirconia, 1.0 % by weight of Co and 2 % by weight of Mg in terms of magnesia.
Condition: Steam/carbon ratio 1.5, LHSV of the raw material oil = 2.5 h⁻¹, ordinary pressure, the temperature of the inlet of the catalyst layer 500°C, the temperature of the outlet of the catalyst layer 700°C

After the above reaction was carried out for consecutive 100 hours, the catalyst of the second reactor was withdrawn, and the proportion of carbon deposition on the catalyst was measured and calculated as follows.

Proportion of carbon deposition (%) = the length of the part where carbon was deposited / the length of the whole catalyst

**Table I-1**

| | Composition (% by volume) | | | | | | |
|---|---|---|---|---|---|---|---|
| | Alkylate | C4HC *1 | Isopentane | DLN *2 | MTBE | PG *3 | FG *4 |
| Example 1 | 59 | - | 41 | - | - | - | - |
| Example 2 | 93 | 7 | - | - | - | - | - |
| Example 3 | 93 | 3 | 4 | - | - | - | - |
| Example 4 | 93 | 5 | - | - | 2 | - | - |
| Example 5 | 90 | 5 | 1 | - | 4 | - | - |
| Example 6 | 75 | 1 | - | 23 | 1 | - | - |
| Example 7 | 51 | 1 | 25 | 20 | 3 | - | - |
| Example 8 | - | - | - | 14 | - | 86 | - |
| Example 9 | - | 3 | - | 38 | - | 59 | - |
| Com. exam. 1 | 28 | 2 | - | 70 | - | - | - |
| Com. exam. 2 | 18 | 2 | - | 70 | - | 10 | - |
| Com. exam. 3 | 30 | 5 | - | - | - | 30 | 35 |

| | | | | | | | |
|---|---|---|---|---|---|---|---|
| *1: Hydrocarbon compound having 4 carbon atoms *2: Desulfurized light naphtha *3: Benzene-free reformed gasoline *4: Gasoline obtained by catalytic cracking | | | | | | | |

**Table I-2**

| | RON | RVP (kPa) | Proportion of carbon deposition (%) |
|---|---|---|---|
| Example 1 | 93 | 80 | 1 |
| Example 2 | 96 | 50 | 2 |
| Example 3 | 96 | 45 | 2 |
| Example 4 | 96 | 45 | 2 |
| Example 5 | 96 | 46 | 2 |
| Example 6 | 89 | 47 | 1 |
| Example 7 | 89 | 78 | 1 |
| Example 8 | 98 | 63 | 1 |
| Example 9 | 89 | 80 | 1 |
| Com. exam. 1 | 75 | 80 | 1 |
| Com. exam. 2 | 76 | 80 | 1 |
| Com. exam. 3 | 97 | 80 | 10 |

### Industrial Applicability

The fuel oil of the invention is suitable as a fuel oil usable both in an internal combustion engine and in a fuel cell, and in detail, since it comprises petroleum hydrocarbon fractions such as the gasoline fraction, it is suitable as a fuel oil usable both in an internal combustion engine and in a fuel cell.

## Claims

1. A fuel oil for use both in an internal combustion engine and in a fuel cell containing 50 % by volume or more of an alkylate gasoline.

2. The fuel oil according to claim 1 further containing 1 to 50 % by volume of isopentane.

3. The fuel oil according to claim 1 further containing 1 to 12 % by volume of a hydrocarbon compound having 4 carbon atoms.

4. The fuel oil according to claim 2 further containing 1 to 12 % by volume of a hydrocarbon compound having 4 carbon atoms.

5. The fuel oil according to claim 1 containing 50 % by volume or more of the alkylate gasoline, 1 to 50 % by volume of isopentane, 1 to 10 % by volume of a hydrocarbon compound having 4 carbon atoms and 7 % by volume or less of an oxygen-containing compound.

6. The fuel oil according to any of claims 1 to 5, further containing 1 to 30 % by volume of a desulfurized light naphtha.

7. The fuel oil according to claim 5 wherein the oxygen-containing compound is at least one selected from methyl tertiary butyl ether, ethyl tertiary butyl ether and tertiary amyl methyl ether.

8. The fuel oil according to claim 1 having a research octane number of 89 or more and a vapor pressure of 44 to 93 kPa.

9. A fuel oil for use both in an internal combustion engine and in a fuel cell containing 10 to 60 % by volume of a desulfurized light naphtha and 40 to 90 % by volume of a benzene-free reformed gasoline.

10. The fuel oil according to claim 9 further containing 10 % by volume or less of a hydrocarbon compound having 4 carbon atoms.

11. The fuel oil according to claim 9 having a research octane number of 89 or more and a vapor pressure of 44 to 93 kPa.
